# EUROPEAN PATENT APPLICATION

(11) **EP 2 312 307 A1**
(43) Date of publication of application: **20.04.2011**
(21) Application number: 10251799.2
(22) Date of filing: 14.10.2010
(51) Int. Cl.: G01N 27/407, G01N 27/419

(54) **Gas sensor and method for manufacturing sensor element**

(30) Priority: 15.10.2009 JP 2009238001; 12.10.2010 JP 2010229623
(71) Applicant: NGK Insulators, Ltd., Nagoya City, Aichi Pref. (JP)
(72) Inventor: Fujita, Hiroki, Nagoya-shi Aichi-ken 467-8530 (JP); Horisaka, Sumiko, Nagoya-shi Aichi-ken 467-8530 (JP); Murakami, Mika, Nagoya-shi Aichi-ken 467-8530 (JP); Ito, Takashi, Nagoya-shi Aichi-ken 467-8530 (JP)
(74) Representative: Paget, Hugh Charles Edward

(57) **Abstract**

An object of the present invention is to provide a gas sensor capable of a high-accuracy measurement which is realized by a high responsiveness and a strength that prevents a sensor element from being damaged by a stress occurring in assemblage and usage. This gas sensor (100) includes a sensor element (101) formed of an oxygen-ion conductive solid electrolyte (6) as a main component, and the sensor element includes: an internal space (20) to which a measurement gas is introduced from the outside; a first electrode (22) formed on a surface of the internal space; a second electrode (23) formed in a space different from the internal space; and a pumping cell including the first and second electrodes. The pumping cell is operable to pump out oxygen existing in the internal space when a predetermined voltage is applied to between the first and second electrodes. The thickness of the internal space is 50 µm or more and 180 µm or less.

## Description

### BACKGROUND OF THE INVENTION

### Field of the Invention

The present invention relates to a gas sensor which measures a predetermined gas component in a measurement gas, and to a method for manufacturing a sensor element.

### Description of the Background Art

Conventionally, various measuring apparatuses have been used for recognizing a concentration of a desired gas component in a measurement gas. For example, as a device for measuring a NOx concentration in a measurement gas such as a combustion gas, known is a gas sensor having an electrochemical pumping cell structured by forming a Pt electrode and a Rh electrode on an oxygen-ion conductive solid electrolyte layer, such as a zirconia (ZrO₂) layer.

Such a gas sensor is manufactured by, for example, performing a predetermined process and printing a circuit pattern on ceramic green sheets, each of which corresponds to each of the layers, then laminating the green sheets, and furthermore baking the laminated body to integrate it. In a known gas sensor, for example, six green sheets are laminated, and baked to be integrated (for example, see Japanese Patent Publication No. 3272215).

In order to enable a high-accuracy measurement in the above-described gas sensor, it is necessary to increase a responsiveness which means enabling a concentration to be measured more quickly following a change of the concentration of the predetermined gas component in the measurement gas, and also to give a sensor element a strength that prevents the sensor element from being damaged by various stresses occurring in assemblage and usage.

For this purpose, it is demanded to form an internal space so that the pumping ability of the pumping cell is exerted at the maximum, and is demanded that any cracking caused by a thermal stress resulting from a steep temperature gradient which occurs because of a warming due to a high-temperature measurement gas or a partial cooling due to disturbances (adherence of water), for example, does not occur in the sensor element.

However, in a case of a conventional gas sensor, there is a limit to the improvement of responsive characteristics and the increase of the strength as mentioned above, because the development is on the assumption that manufacturing is performed by laminating a plurality of green sheets of the same thickness to one another as disclosed in Japanese Patent Publication No. 3272215 for the purpose of cost reduction, simplification of the manufacturing, and the like.

### SUMMARY OF THE INVENTION

The present invention relates to a gas sensor which measures a predetermined gas component in a measurement gas component, and a method for manufacturing a sensor element included in the gas sensor, and particularly the present invention is directed to a structure and an arrangement of an internal space of the sensor element.
According to the present invention, a gas sensor has a sensor element formed of an oxygen-ion conductive solid electrolyte as a main component, and the sensor element includes: an internal space to which the measurement gas is introduced from the outside; a first electrode formed on a surface of the internal space; a second electrode formed in a space different from the internal space; and a pumping cell including the first electrode and the second electrode. The pumping cell is operable to pump out oxygen existing in the internal space when a predetermined voltage is applied to between the first electrode and the second electrode, and the thickness of the internal space is 50 µm or more and 180 µm ore less.
This can realize a gas sensor having a high responsiveness and capable of a high-accuracy measurement.
Preferably, a distance between the internal space and an upper surface of the sensor element is 220 µm or more and 600 µm or less.
This enables the sensor element to have a strength that prevents the sensor element from being damaged by a stress occurring in assemblage and usage, and consequently a gas sensor capable of a high-accuracy measurement can be realized.
Therefore, an object of the present invention is to provide a gas sensor having a high responsiveness and a high strength to enable a high-accuracy measurement, and a method for manufacturing a sensor element.

### BRIEF DESCRIPTION OF THE DRAWINGS

FIG. 1 is a partial cross-sectional view showing an outline of an exemplified structure of a gas sensor according to a preferred embodiment of the present invention;
FIG. 2 shows an outline of a cross section of a sensor element of FIG. 1 taken along the line A-A', as seen from a reference gas inlet space side;
FIG. 3 shows a relationship between the thickness of an internal space and a response time, and a relationship between the thickness of the first internal space and a diffusion resistance;
FIG. 4 shows a relationship between the thickness of a pump layer and a breakdown droplet amount ratio, and a relationship of the thickness of the pump layer and an impedance;
FIG. 5 is a cross-sectional view schematically showing an outline of a structure of a sensor element having three internal spaces;
FIG. 6 is a cross-sectional view schematically showing an outline of a structure of a sensor element having three internal spaces;
FIG. 7 is a cross-sectional view schematically showing an outline of a structure of a sensor element having three internal spaces;
FIG. 8 shows a relationship between the thickness x1 of an internal space and a response time with respect to a sensor element;
FIG. 9 shows a relationship between the thickness x1 of an internal space and a response time with respect to a sensor element; and
FIG. 10 shows a relationship between the thickness x1 of an internal space and a response time with respect to a sensor element.

### DESCRIPTION OF THE PREFERRED EMBODIMENTS

### <Outline Structure of Gas

Firstly, an outline of the structure of a gas sensor 100 will be described.

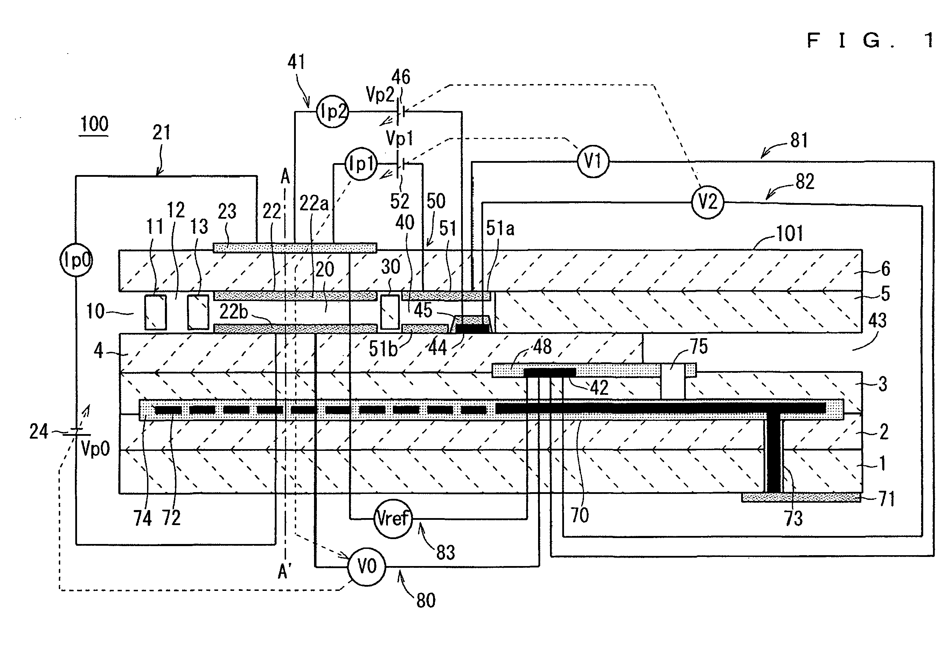

FIG. 1 is a cross-sectional view schematically showing an outline of an exemplified structure of the gas sensor 100. A sensor element 101 is an elongated plate-shaped element having a structure in which six layers, namely, a first substrate layer 1, a second substrate layer 2, a third substrate layer 3, a first solid electrolyte layer 4, a spacer layer (cavity layer) 5, and a second solid electrolyte layer (pump layer) 6, are laminated in the mentioned order from the bottom side seen in FIG. 1, each of the layers being formed as an oxygen-ion conductive solid electrolyte layer such as a zirconia (ZrO₂) layer. The solid electrolyte forming these six layers is densely airtight. The sensor element 101 is manufactured by, for example, performing a predetermined process and printing a circuit pattern on ceramic green sheets, each of which corresponds to each of the layers, then laminating the green sheets, and furthermore baking the laminated body to integrate it.

Between a lower surface of the second solid electrolyte layer 6 and an upper surface of the first solid electrolyte layer 4 at one end portion of the sensor element 101, a gas inlet 10, a first diffusion control part 11, a buffer space 12, a second diffusion control part 13, a first internal space 20, a third diffusion control part 30, and a second internal space 40, are adjacently formed in the mentioned order so as to be in communication with one another.

The gas inlet 10, the buffer space 12, the first internal space 20, and the second internal space 40 are spaces within the sensor element 101 provided by hollowing out the spacer layer 5, in which their upper portions are defined by the lower surface of the second solid electrolyte layer 6, their lower portions are defined by the upper surface of the first solid electrolyte layer 4, and their side portions are defined by a side surface of the spacer layer 5.

Each of the first diffusion control part 11, the second diffusion control part 13, and the third diffusion control part 30 is provided as two horizontally long slits (whose openings are elongated in a direction perpendicular to the plane of the drawing sheet of FIG. 1). A part extending from the gas inlet 10 to the second internal space 40 is also referred to as a gas distribution part.

At a position which is farther from the end portion than the gas distribution part is, a reference gas inlet space 43 is provided between an upper surface of the third substrate layer 3 and a lower surface of the spacer layer 5. A side portion of the reference gas inlet space 43 is defined by a side surface of the first solid electrolyte layer 4. As a reference gas for measuring a NOx concentration, for example, air is introduced into the reference gas inlet space 43.

An air introduction layer 48 is constituted by porous alumina. The reference gas is introduced through the reference gas inlet space 43 into the air introduction layer 48. The air introduction layer 48 is formed so as to cover a reference electrode 42.

The reference electrode 42 is an electrode formed so as to be interposed between the upper surface of the third substrate layer 3 and the first solid electrolyte layer 4. As described above, the air introduction layer 48 leading to the reference gas inlet space 43 is provided around the reference electrode 42. By using the reference electrode 42, an oxygen concentration (oxygen partial pressure) in the first internal space 20 or the second internal space 40 can be measured, as will be described later.

In the gas distribution part, the gas inlet 10 is open to the outside, and a measurement gas is taken into the sensor element 101 from the outside through the gas inlet 10.

The first diffusion control part 11 applies a predetermined diffusion resistance to the measurement gas taken through the gas inlet 10.

The buffer space 12 is provided in order to guide the measurement gas introduced from the first diffusion control part 11, to the second diffusion control part 13.

The second diffusion control part 13 applies a predetermined diffusion resistance to the measurement gas introduced from the buffer space 12 into the first internal space 20.

When the measurement gas is introduced from the outside of the sensor element 101 into the first internal space 20, the measurement gas which was abruptly taken into the sensor element 101 through the gas inlet 10 due to a pressure fluctuation of the measurement gas existing in the outside (a pulsation of exhaust gas pressure, in a case where the measurement gas is an automobile exhaust gas) is not directly introduced into the first internal space 20, but is introduced into the first internal space 20 after a concentration fluctuation in the measurement gas is cancelled through the first diffusion control part 11, the buffer space 12, and the second diffusion control part 13. As a result, the concentration fluctuation in the measurement gas introduced into the first internal space 20 is reduced to as small as negligible.

The first internal space 20 is provided as a space for adjusting oxygen partial pressure in the measurement gas introduced through the second diffusion control part 13. The oxygen partial pressure is adjusted by the operation of a main pumping cell 21.

The main pumping cell 21 is an electrochemical pumping cell constituted by an inside pump electrode 22, an outside pump electrode 23, and a part of the second solid electrolyte layer 6 interposed between these electrodes. The inside pump electrode 22 has a ceiling electrode portion 22a provided on a substantially entire part of the lower surface of the second solid electrolyte layer 6 facing the first internal space 20. The outside pump electrode 23 is provided in a region on an upper surface of the second solid electrolyte layer 6 corresponding to the ceiling electrode portion 22a, so as to be exposed to the outside.

The inside pump electrode 22 is formed over the upper and lower solid electrolyte layers (the second solid electrolyte layer 6 and the first solid electrolyte layer 4) which define the first internal space 20, and the spacer layer 5 which provides a side wall to the first internal space 20. To be specific, the ceiling electrode portion 22a is formed on the lower surface of the second solid electrolyte layer 6 which provides a ceiling surface to the first internal space 20. A bottom electrode portion 22b is formed on the upper surface of the first solid electrolyte layer 4 which provides a bottom surface to the first internal space 20. A side electrode portion (not shown) connecting the ceiling electrode portion 22a to the bottom electrode portion 22b is formed on side wall surfaces (inner surfaces) of the spacer layer 5 which forms both side wall portions of the first internal space 20. Thus, the inside pump electrode 22 has a tunnel-like shape at a location where the side electrode portion is disposed.

Each of the inside pump electrode 22 and the outside pump electrode 23 is formed as a porous cermet electrode (for example, a cermet electrode including Pt containing Au by 1% and zirconia). The inside pump electrode 22 which is brought into contact with the measurement gas is formed using a material having a weakened reduction ability with respect to a NOx component in the measurement gas, or having no reduction ability with respect to the NOx component in the measurement gas.

In the main pumping cell 21, a desired pump voltage Vp0 is applied between the inside pump electrode 22 and the outside pump electrode 23 to make a pump current Ip0 flow in a positive direction or a negative direction between the inside pump electrode 22 and the outside pump electrode 23, and this allows oxygen existing within the first internal space 20 to be pumped out to the outside or oxygen existing in the outside to be pumped into the first internal space 20.

In order to detect an oxygen concentration (oxygen partial pressure) in the atmosphere of the first internal space 20, an electrochemical sensor cell, in other words, a main-pump-controlling oxygen-partial-pressure detection sensor cell 80 is formed with the inside pump electrode 22, the second solid electrolyte 6, the spacer layer 5, the first solid electrolyte 4, the third substrate layer 3, and the reference electrode 42.

The oxygen concentration (oxygen partial pressure) in the first internal space 20 can be recognized by measuring an electromotive force V0 of the main-pump-controlling oxygen-partial-pressure detection sensor cell 80. Moreover, the pump current Ip0 is controlled by feedback-controlling Vp0 so as to maintain the electromotive force V0 constant. Thereby, the oxygen concentration in the first internal space 20 can be maintained at a predetermined constant value.

The third diffusion control part 30 applies a predetermined diffusion resistance to the measurement gas whose oxygen concentration (oxygen partial pressure) has been controlled in the first internal space 20 by the operation of the main pumping cell 21, and guides the measurement gas to the second internal space 40.

The second internal space 40 is provided as a space for performing a process of measuring a nitrogen oxide (NOx) concentration in the measurement gas introduced through the third diffusion control part 30. The measurement of the NOx concentration is performed mainly by an auxiliary pumping cell 50, in the second internal space 40 in which the oxygen concentration has been adjusted, further by an operation of a measuring pumping cell 41.

In the second internal space 40, the auxiliary pumping cell 50 performs further adjustment of oxygen partial pressure on the measurement gas whose oxygen concentration (oxygen partial pressure) has been controlled in advance in the first internal space 20 and which has then been introduced through the third diffusion control part 30. This enables an oxygen concentration in the second internal space 40 to be accurately maintained constant. Therefore, the gas sensor 100 can measure a NOx concentration with a high accuracy.

The auxiliary pumping cell 50 is an auxiliary electrochemical pumping cell constituted by an auxiliary pump electrode 51, the outside pump electrode 23 (not limited to the outside pump electrode 23 but may be an appropriate electrode positioned outside the sensor element 101), and the second solid electrolyte layer 6. The auxiliary pump electrode 51 has a ceiling electrode portion 51a provided on a substantially entire part of the lower surface of the second solid electrolyte layer 6 facing the second internal space 40.

Similarly to the inside pump electrode 22 provided in the first internal space 20, the auxiliary pump electrode 51 has a tunnel-like shape and provided in the second internal space 40. That is, the ceiling electrode portion 51a is formed on the second solid electrolyte layer 6 which provides a ceiling surface to the second internal space 40. A bottom electrode portion 51b is formed on the first solid electrolyte layer 4 which provides a bottom surface to the second internal space 40. A side electrode portion (not shown) connecting the ceiling electrode portion 51a to the bottom electrode portion 51b is formed on both wall surfaces of the spacer layer 5 which provides side walls to the second internal space 40.

Similarly to the inside pump electrode 22, the auxiliary pump electrode 51 is formed using a material having a weakened reduction ability with respect to a NOx component in the measurement gas, or having no reduction ability with respect to the NOx component in the measurement gas.

In the auxiliary pumping cell 50, a desired voltage Vp1 is applied between the auxiliary pump electrode 51 and the outside pump electrode 23, and this allows oxygen existing in the atmosphere of the second internal space 40 to be pumped out to the outside or oxygen existing in the outside to be pumped into the second internal space 40.

In order to control oxygen partial pressure in the atmosphere of the second internal space 40, an electrochemical sensor cell, in other words, an auxiliary-pump-controlling oxygen-partial-pressure detection sensor cell 81 is formed with the auxiliary pump electrode 51, the reference electrode 42, the second solid electrolyte layer 6, the spacer layer 5, the first solid electrolyte layer 4, and the third substrate layer 3.

A variable power source 52 causes the auxiliary pumping cell 50 to perform pumping. The variable power source 52 is voltage-controlled based on an electromotive force V1 which is detected by the auxiliary-pump-controlling oxygen-partial-pressure detection sensor cell 81. Therefore, the oxygen partial pressure in the atmosphere of the second internal space 40 is lowered to have substantially no influence on the NOx measurement.

At the same time, a pump current Ip1 of the auxiliary pumping cell 50 is used for a control of the electromotive force of the main-pump-controlling oxygen-partial-pressure detection sensor cell 80. Specifically, the pump current Ip1 is inputted as a control signal to the main-pump-controlling oxygen-partial-pressure detection sensor cell 80, and its electromotive force V0 is controlled, so that a gradient of the oxygen partial pressure in the measurement gas introduced through the third diffusion control part 30 into the second internal space 40 is maintained so as to be always constant. When used as a NOx sensor, the oxygen concentration in the second internal space 40 is maintained at a constant value of approximately 0.001 ppm, by the operations of the main pumping cell 21 and the auxiliary pumping cell 50.

The measuring pumping cell 41 measures the NOx concentration in the measurement gas, within the second internal space 40. The measuring pumping cell 41 is an electrochemical pumping cell constituted by a measuring electrode 44, the outside pump electrode 23, the second solid electrolyte layer 6, the spacer layer 5, and the first solid electrolyte layer 4. The measuring electrode 44 is provided on the upper surface of the first solid electrolyte layer 4 which faces the second internal space 40, and provided at a position spaced away from the third diffusion control part 30.

The measuring electrode 44 is a porous cermet electrode. The measuring electrode 44 also functions as a NOx reducing catalyst which reduces NOx existing in the atmosphere of the second internal space 40. The measuring electrode 44 is covered with a fourth diffusion control part 45.

The fourth diffusion control part 45 is a film constituted by a porous body containing alumina (Al₂O₃) as a main component. The fourth diffusion control part 45 serves to limit the amount of NOx flowing into the measuring electrode 44, and also functions as a protective film of the measuring electrode 44.

The measuring pumping cell 41 can pump out oxygen generated by decomposition of nitrogen oxide in the atmosphere around the measuring electrode 44, and detects the amount of the generated oxygen as a pump current Ip2.

In order to detect oxygen partial pressure around the measuring electrode 44, an electrochemical sensor cell, in other words, a measuring-pump-controlling oxygen-partial-pressure detection sensor cell 82 is formed with the second solid electrolyte layer 6, the spacer layer 5, the first solid electrolyte layer 4, the third substrate layer 3, the measuring electrode 44, and the reference electrode 42. The variable power source 46 is controlled based on an electromotive force V2 detected by the measuring-pump-controlling oxygen-partial-pressure detection sensor cell 82.

The measurement gas introduced into the second internal space 40, whose oxygen partial pressure is being controlled, reaches the measuring electrode 44 through the fourth diffusion control part 45. Nitrogen oxide in the measurement gas around the measuring electrode 44 is reduced (2NO〉̶N2+O2), to generate oxygen. The generated oxygen is pumped by the measuring pumping cell 41. At this time, a voltage Vp2 of the variable power source is controlled such that a control voltage V2 detected by the measuring-pump-controlling oxygen-partial-pressure detection sensor cell 82 can be maintained constant. The amount of oxygen generated around the measuring electrode 44 is proportional to a nitrogen-oxide concentration in the measurement gas. Thus, the nitrogen-oxide concentration in the measurement gas is calculated by using the pump current Ip2 of the measuring pumping cell 41.

If the measuring electrode 44, the first solid electrolyte layer 4, the third substrate layer 3, and the reference electrode 42 are combined to form an electrochemical sensor cell functioning as oxygen-partial-pressure detection means, an electromotive force can be detected in accordance with a difference between the amount of oxygen generated by the reduction of a NOx component in the atmosphere around the measuring electrode 44 and the amount of oxygen contained in a reference atmosphere. Thereby, a concentration of the NOx component in the measurement gas can be obtained.

An electrochemical sensor cell 83 is formed with the second solid electrolyte layer 6, the spacer layer 5, the first solid electrolyte layer 4, the third substrate layer 3, the outside pump electrode 23, and the reference electrode 42. By an electromotive force Vref obtained by the sensor cell 83, oxygen partial pressure in the measurement gas existing in the outside of the sensor can be detected.

In the gas sensor 100 having the above-described structure, by operating the main pumping cell 21 and the auxiliary pumping cell 50, the measurement gas whose oxygen partial pressure is always maintained at a constant low value (having substantially no influence on the NOx measurement) is given to the measuring pumping cell 41. Accordingly, the NOx concentration in the measurement gas can be recognized based on the pump current Ip2 which flows due to the oxygen generated by the reduction of NOx being pumped out by the measuring pumping cell 41 substantially in proportion to the NOx concentration in the measurement gas.

Furthermore, in order to enhance an oxygen-ion conductivity of the solid electrolyte, the sensor element 101 includes a heater part 70 serving for a temperature control for heating and keeping warm the sensor element 101. The heater part 70 includes a heater electrode 71, a heater 72, a through hole 73, a heater insulating layer 74, and a pressure diffusion hole 75.

The heater electrode 71 is an electrode formed in contact with a lower surface of the first substrate layer 1. By connecting the heater electrode 71 to an external power source, electrical power can be supplied to the heater part 70 from the outside.

The heater 72 is an electric resistor interposed between the second substrate layer 2 and the third substrate layer 3 vertically. The heater 72 is connected to the heater electrode 71 via the through hole 73. The heater 72 generates heat when power is supplied from the outside through the heater electrode 71, and heats and keeps warm the solid electrolyte which forms the sensor element 101.

The heater 72 is buried over the entire area extending from the first internal space 20 to the second internal space 40, so that the temperature of the entire sensor element 101 can be adjusted at a temperature at which the solid electrolyte is activated.

The heater insulating layer 74 is an insulating layer constituted by an insulator such as alumina and formed on upper and lower surfaces of the heater 72. The heater insulating layer 74 is formed for the purpose of providing an electrical insulation between the second substrate layer 2 and the heater 72 and an electrical insulation between the third substrate layer 3 and the heater 72.

The pressure diffusion hole 75 is formed through the third substrate layer 3, and communicates with the reference gas inlet space 43. The pressure diffusion hole 75 is formed for the purpose of relieving a rise in the internal pressure which is involved in a temperature rise in the heater insulating layer 74.

### <Size and Position of Internal Space>

Next, the sizes and the forming positions of the first internal space 20 and the second internal space 40 of the sensor element 101 will be described.

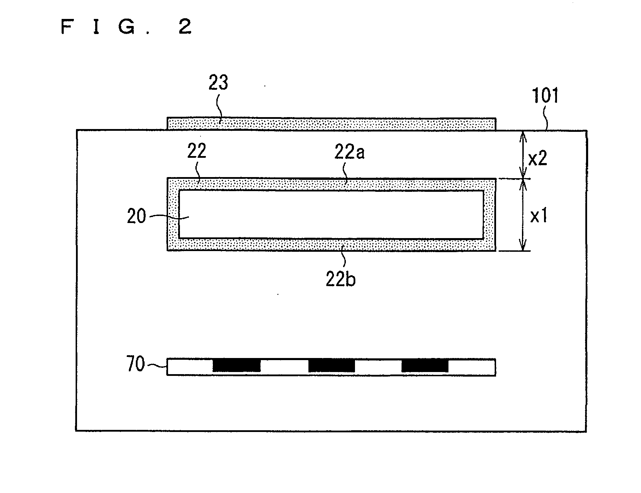

FIG. 2 shows an outline of a cross section (cross section extending through the first internal space 20 and sectioned perpendicularly to a lengthwise direction of the sensor element 101) of the sensor element 101 of FIG. 1 taken along the line A-A', as seen from the reference gas inlet space 43 side.

In FIG. 2, the length (the thickness of the first internal space 20) of the first internal space 20 with respect to a short-side direction (a thickness direction of the sensor element 101) of the A-A' cross section (FIG. 1) of the sensor element 101 is represented as x1. The thickness direction of the sensor element 101 is equal to the short-side direction of the first internal space in the A-A' cross section thereof. However, in a case where a plurality of internal spaces each including a pumping cell are provided as in the sensor element 101, the thickness (a length with respect to the thickness direction of the sensor element 101) of any of the internal spaces is x1. Therefore, in the following description, x1 is simply called the thickness of the internal space. Additionally, in FIG. 2, a distance between the first internal space 20 and an upper surface of the sensor element 101 with respect to the thickness direction of the sensor element 101 is represented as x2. The distance x2 corresponds to the thickness of the pump layer 6. Therefore, hereinafter, a description will be given of ranges of x1 and x2 which define a preferred size and position of the internal space.

### (Thickness of Internal Space of Sensor Element)

Firstly, a description will be given of a preferred range of the thickness of the internal space, which is a value defining the size of the internal space of the sensor element 101.

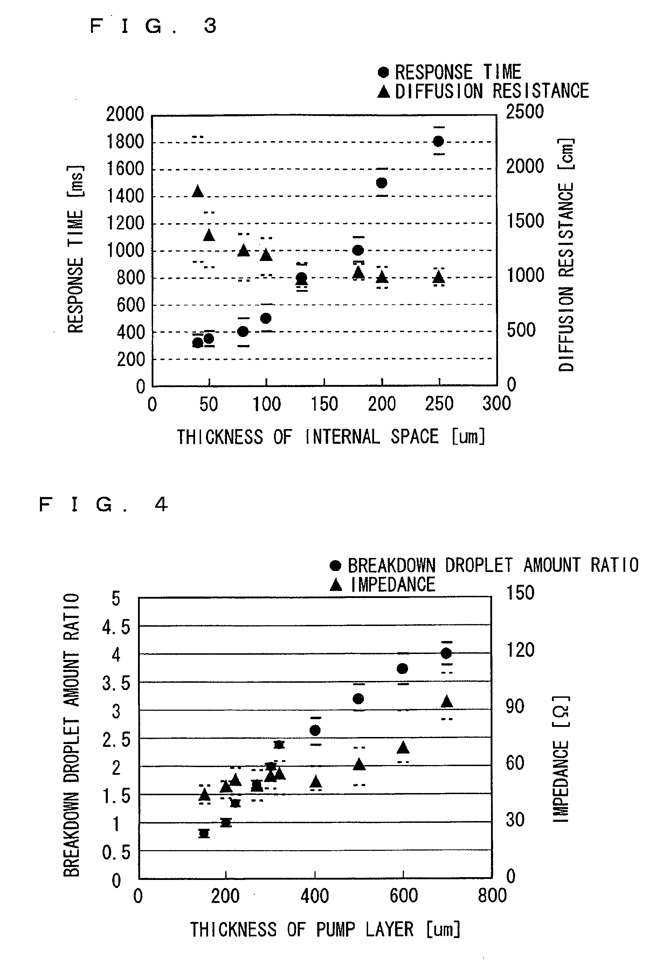

FIG. 3 shows a relationship between the thickness x1 of the internal space and a response time, and a relationship between the thickness x1 of the internal space and a diffusion resistance. Specifically, FIG. 3 shows measurement results obtained by preparing several kinds of gas sensors 100 (ten for each kind) different from one another in the thickness of the internal space, and measuring a response time and a diffusion resistance with respect to each of the gas sensors 100. In FIG. 3, circles and triangles indicate average values of measurement values measured under the same conditions with respect to the response time and the diffusion resistance, respectively, and lines above and below the circles and triangles indicate the maximum values and the minimum values of the measurement values under the respective measurement conditions. In a precise sense, the response time and the diffusion resistance change in accordance with the size of a region except the pump electrode (in the first internal space 20, the inside pump electrode 22) provided in each internal space. However, the thickness (the length with respect to the thickness direction of the sensor element 101) of the inside pump electrode 22 or the auxiliary pump electrode 51, for example, is approximately 10 µm to 15 µm, which is small as compared with the thickness x1 of the internal space. Therefore, in the following, for the sake of simplification, it is considered that the thickness of the pump electrode provided in the internal space is negligible except in some exceptional cases.

The response time was obtained in the following manner. The NOx concentration in the measurement gas was instantaneously changed, and a time period was measured from when a sensor output (Ip2) corresponding to 10% relative to a sensor output (Ip2) for the NOx concentration after the change was detected to when a sensor output (Ip2) corresponding to 90% relative to the sensor output (Ip2) for the NOx concentration after the change was detected.

On the other hand, the diffusion resistance was calculated based on the Nernst equation by using a limit current value obtained from a current-voltage curve of each electrode.

As shown in FIG. 3, if the thickness x1 of the internal space is less than 50 µm, the diffusion resistance (the average value) and a variation of the diffusion resistance rapidly increase. It is considered that such an increase of the diffusion resistance is caused because thinning the internal space shortens the distance between the upper electrode (in the first internal space 20, the ceiling electrode portion 22a) and the lower electrode (in the first internal space 20, the bottom electrode portion 22b) so that a diffusion resistance applied by the region between the upper electrode and the lower electrode increases. It is also considered that the increase of the variation of the diffusion resistance is caused because if the internal space is thin, the influence of the pump electrode provided in the internal space is no longer negligible and a variation due to the pump electrode overlaps. Specifically, it is considered that the increase of the variation is due to a variation of the cross-section area between the electrodes and a variation of the length of a diffusion path, which are caused because the cross sectional shape of the inside pump electrode 22, the auxiliary pump electrode 51, or the like, which is a porous cermet electrode, is not exactly rectangular.

Occurrence of such a variation of the diffusion resistance given to the measurement gas in the internal space causes a variation of a total diffusion resistance applied throughout a period from when the measurement gas is introduced through the gas inlet 10 to when the measurement gas reaches the measuring electrode 44. This makes a high-accuracy measurement difficult. Therefore, the thickness x1 of the internal space is preferably equal to or more than 50 µm.

On the other hand, as shown in FIG. 3, as the thickness x1 of the internal space decreases, the response time becomes quicker. It is considered that this is because when the volume of the internal space is reduced by the thinning of the thickness of the internal space x1, the volume (pumped volume) of a space controlled by the main pumping cell 21, the auxiliary pumping cell 50, or the like, is reduced, so that a pumping ability (oxygen-concentration controllability) of the main pumping cell is improved. Generally, if a response time obtained under the same conditions is equal to or less than 1500 ms, there is practically no problem in the response time. However, for a more precise engine control, it is preferred that the response time is 1200 ms. In FIG. 3, the response time is equal to or less than 1200 ms when the value of x1 is equal to or less than 180µm, and therefore it is preferred that the thickness x1 of the internal space is equal to or less than 180µm.

Considering the above, in the gas sensor 100 according to this preferred embodiment, it is preferred that the thickness of the internal space of the sensor element 101 is 50 µm to 180 µm. By satisfying this requirement, the gas sensor 100 according to this preferred embodiment has a high responsiveness and can perform a high-accuracy measurement.

### (Position of Internal Space)

Next, a description will be given of a preferred range of the distance x2 between the internal space and the upper surface of the sensor element 101, which is a value defining the position of the internal space.

FIG. 4 shows a relationship between the thickness x2 of the pump layer 6 and a breakdown droplet amount which serves as an index of the breakdown strength of the sensor element 101, and a relationship between the thickness x2 of the pump layer 6 and an impedance. Specifically, FIG. 4 shows measurement results obtained by preparing several kinds of gas sensors 100 (ten for each kind) different from one another in the thickness of the pump layer 6, and measuring a breakdown droplet amount and an impedance with respect to each of the gas sensors 100. Here, the breakdown droplet amount is indicated as a ratio relative to the value obtained when the thickness of the pump layer 6 is 200 µm. In FIG. 4, circles and triangles indicate average values of measurement values measured under the same conditions with respect to a breakdown droplet amount ratio and the impedance, respectively, and lines above and below the circles and triangles indicate the maximum values and the minimum values of the measurement values under the respective measurement conditions.

The breakdown droplet amount was obtained by performing a water droplet dropping test. To be specific, the sensor element 101 was driven while being heated at a predetermined temperature, and a water droplet was dropped at a predetermined portion (for example, at the end of the element, at the side surface of the element, or on the outside electrode) of the sensor element 101, to examine whether cracking occurred in the sensor element 101 or not. Until cracking occurred in the sensor element 101, the same test was conducted, with the amount of the dropped water droplet increased. At the time point when cracking occurred in the sensor element 101, the driving of the sensor element 101 was stopped, and the amount of the water droplet at this time point was regarded as the breakdown droplet amount.

On the other hand, the impedance was obtained by measuring a current-voltage curve between the inside pump electrode 22 and the outside pump electrode 23, and calculating the inclination of a linear portion thereof.

As shown in FIG. 4, when the thickness x2 of the pump layer 6 exceeds 400 µm, the value of the impedance rapidly increases. It is considered that this is because an increase of the thickness of the pump layer 6 causes an increase of the impedance of the pump layer 6 which exists between the inside pump electrode 22 and the outside pump electrode 23.

Such an increase of the impedance in the pumping cell is not preferable, because the oxygen pumping process performed by the pumping cell cannot be easily controlled with a high accuracy. Generally, if an impedance obtained under the same conditions is equal to or less than 90Ω, the impedance has no influence on the measurement accuracy. In FIG. 4, the impedance is equal to or less than 90Ω when the value of the x2 is equal to or less than 600 µm, and therefore the thickness x2 of the pump layer is preferably equal to or less than 600 µm. More preferably, the thickness x2 of the pump layer is equal to or less than 400 µm.

On the other hand, as shown in FIG. 4, as the thickness x2 of the pump layer 6 increases, the breakdown droplet amount becomes larger. In other words, as the pump layer 6 is thicker, the breakdown strength of the sensor element 101 increases. Generally, if a breakdown droplet amount obtained when a water droplet dropping test is performed under the same conditions is equivalent to the breakdown droplet amount of the existing sensor, there is practically no problem in the breakdown strength. However, to ensure a reliability under an environment of a higher temperature or a larger temperature variation and thus realize a high-accuracy sensor, it is preferred that the breakdown droplet amount is equal to or greater than 1.3 times the breakdown droplet amount of the existing sensor. Therefore, the thickness x2 of the pump layer is preferably equal to or more than 220 µm which is the range in which the breakdown droplet amount ratio is equal to or more than 1.3 in FIG. 4.

Considering the above, in the gas sensor 100 according to this preferred embodiment, it is preferred that the thickness of the pump layer 6 of the sensor element 101 is 220 µm to 600 µm. By satisfying this requirement, the gas sensor 100 according to this preferred embodiment has the sensor element 101 with a high strength, and consequently can perform a high-accuracy measurement.

### <Manufacturing Process of Sensor Element>

Next, a process of manufacturing the sensor element 101 having the above-described configuration will be described. In this preferred embodiment, a lamination body constituted by green sheets which contain, as ceramic component, an oxygen-ion conductive solid electrolyte such as zirconia is formed. This lamination body is cut and baked, thereby forming the sensor element 101.

To form the sensor element 101 constituted by the six layers shown in FIG. 1, six green sheets are prepared, corresponding to the first substrate layer 1, the second substrate layer 2, the third substrate layer 3, the first solid electrolyte layer 4, the spacer layer 5, and the second solid electrolyte layer 6, respectively.

Firstly, a blank sheet corresponding to each of the layers is prepared. Here, in order that the completed sensor element 101 can satisfy the above-described requirements of the thickness x1 of the internal space and the thickness x2 of the pump layer 6, a blank sheet having a thickness of 55 µm to 200 µm is used for the spacer layer 5, and a blank sheet having a thickness of 240 µm to 720 µm is used for the second solid electrolyte layer 6.

Next, a process treatment, a pattern printing, and a drying process are performed on each blank sheet. To print a pattern and an adhesive, a known screen-printing technique is available. For the drying process after the printing, known drying means is available, too. When the pattern printing is completed, an adhering paste is printed for laminating and adhering the green sheets each corresponding to each of the layers, and the drying process is performed.

Subsequently, the green sheets to which the adhesive has been applied are laminated in a predetermined order, and a pressure bonding process is performed. In the pressure bonding process, the laminated green sheets are pressure-bonded by predetermined temperature/pressure conditions being applied thereto, so that a single lamination body is formed. When the lamination body is obtained, a plurality of portions of the lamination body are cut, to cut out an individual unit (referred to as an element body) of the sensor element 101. The element body thus cut out is baked under predetermined conditions. Thereby, produced is the sensor element 101 that satisfies the above-described ranges of the thickness x1 of the first internal space 20 and the thickness x2 of the pump layer 6.

As thus far described above, in this preferred embodiment, there can be obtained a gas sensor which is allowed to perform a high-accuracy measurement by realizing a high responsiveness and an increase of the strength of the sensor element.

### <Modification>

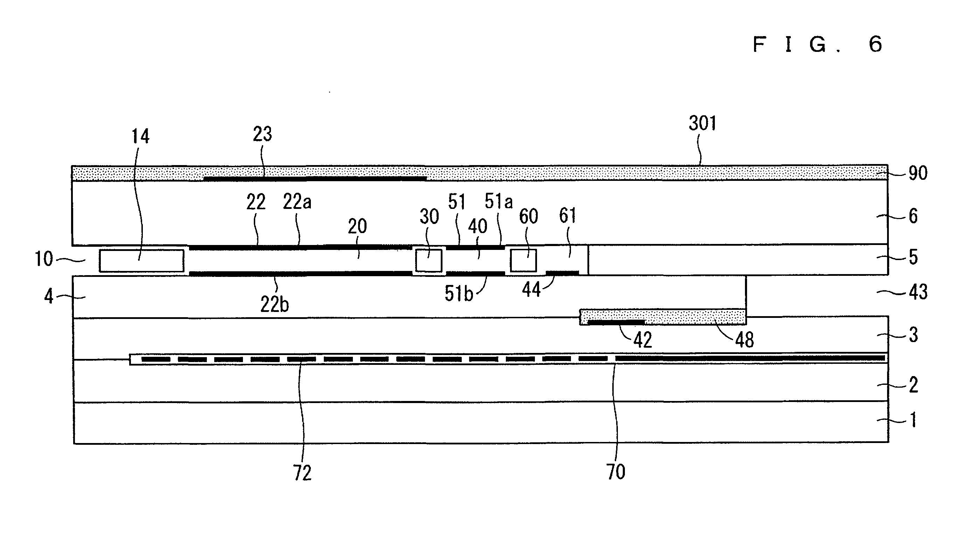

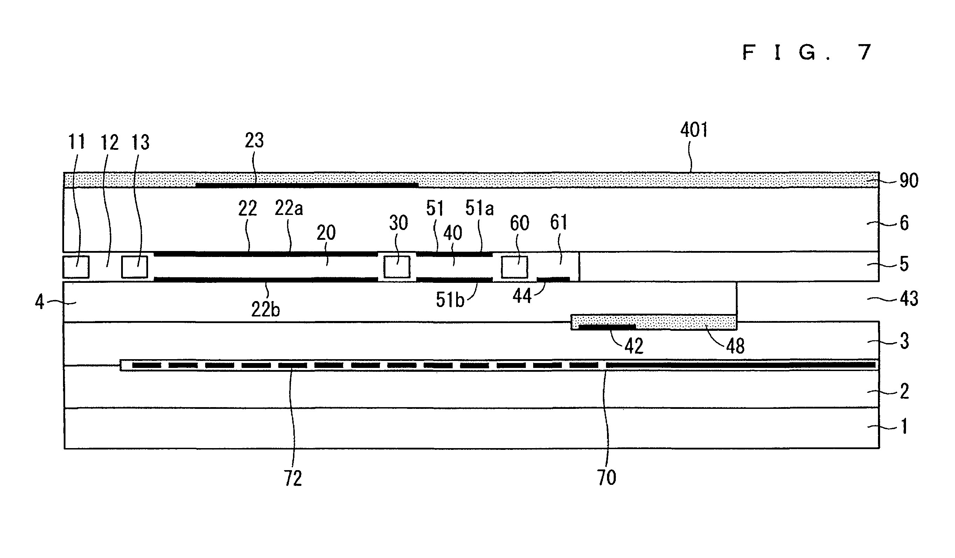

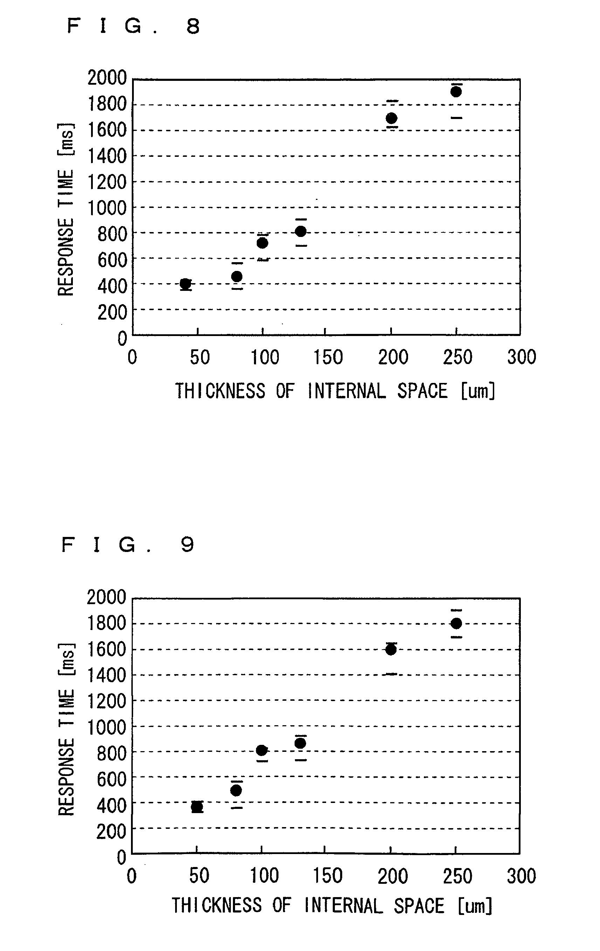

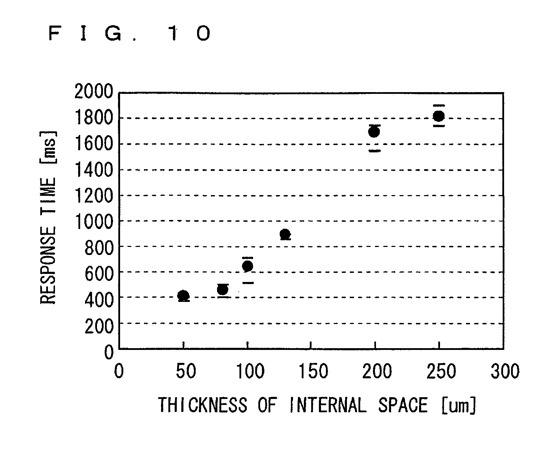

In the above-described preferred embodiment, the preferred range of the thickness x1 of the internal space of the sensor element and the preferred range of the distance x2 between the internal space and the upper surface of the sensor element 101 are shown with respect to a gas sensor whose sensor element has two internal spaces. However, a structure of the sensor element to which these preferred ranges of x1 and x2 are applied is not limited thereto.

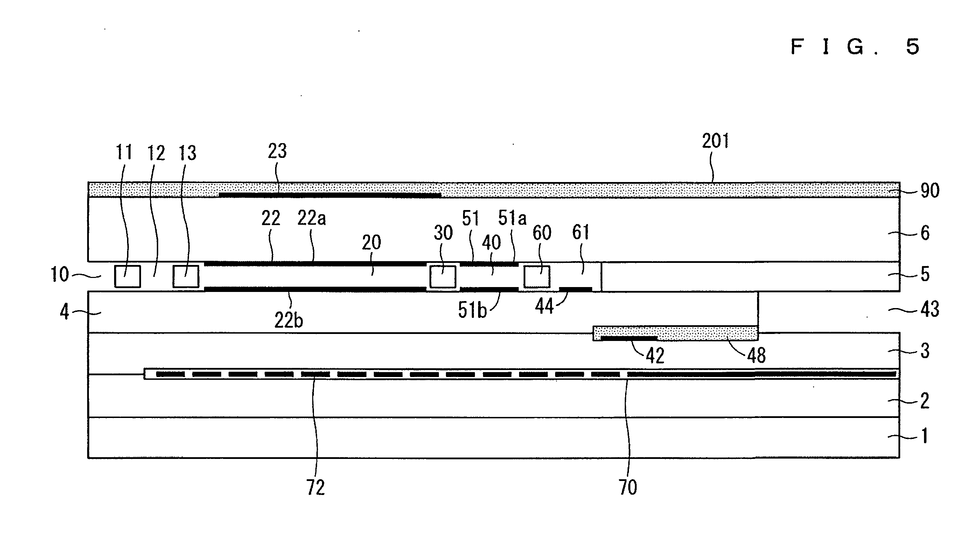

FIG. 5, FIG. 6, and FIG. 7 are cross-sectional views schematically showing outlines of exemplified structures of sensor elements 201, 301, and 401, respectively, each having three internal spaces. Among component elements included in the sensor elements 201, 301, and 401, the component elements that are the same as the component elements included in the sensor element 101 according to the above-described preferred embodiment are denoted by the same corresponding reference numerals as those of the sensor element 101, and specific descriptions thereof are omitted. Although the sensor elements 201, 301, and 401 have the heater part 70 similar to that of the sensor element 101, the heater part 70 is simplified in FIGS. 5 to 7.
In the sensor element 201 shown in FIG. 5, the part from the gas inlet 10 to the second internal space 40 is provided in the same manner as in the sensor element 101. Moreover, a fourth diffusion control part 60 and a third internal space 61 are, in the mentioned order, in communication with the second internal space 40. Similarly to the first diffusion control part 11, the second diffusion control part 13, and the third diffusion control part 30, the fourth diffusion control part 60 is provided as two horizontally long slits (whose openings are elongated in a direction perpendicular to the plane of the drawing sheet of FIG. 5).
However, in the second internal space 40, only the auxiliary pump electrode 51 is provided. Although the measuring electrode 44 and the fourth diffusion control part 45 are provided in the second internal space 40 of the sensor element 101, they are not provided in the second internal space 40 of the sensor element 201. In the sensor element 201, the measuring electrode 44 is provided on the upper surface of the first solid electrolyte layer 4 facing the third internal space 61, in such a manner that the measuring electrode 44 is exposed in the third internal space 61. That is, the sensor element 201 employs a structure in which the slit-shaped fourth diffusion control part 60 is provided, instead of the structure employed by the sensor element 101 in which the measuring electrode 44 is covered in the fourth diffusion control part 45.
Additionally, in the sensor element 201, a protective layer 90 constituted by a porous body is provided on the second solid electrolyte layer (pump layer) 6. The protective layer 90 may be provided in the sensor element 101 according to the above-described preferred embodiment, too.
The sensor element 301 shown in FIG. 6 has the same structure as that of the sensor element 201, except that the buffer space 12 is omitted and that the first diffusion control part 11 and the second diffusion control part 13 form a single diffusion control part 14.
The sensor element 401 shown in FIG. 7 has the same structure as that of the sensor element 201, except that the inlet 10 is omitted so that the first diffusion control part 11 serves as an opening part directly opening to the outside, and that the size of the second internal space 40 with respect to the lengthwise direction of the sensor element 401 is large.
In the sensor elements 201, 301, and 401 having the above-described structures, similarly to in the sensor element 101, by setting the value of x1 to be 50 µm or more and 180 µm or less and the value of x2 to be 220 µm or more and 600 µm or less, the strength of the sensor elements is increased and a responsiveness of the gas sensors including the respective elements is improved, thus realizing an increase of the accuracy of measurement of the gas sensors. For example, in the sensor elements 201, 301, and 401 shown in FIGS. 8, 9, and 10, a relationship between the thickness x1 of the internal space and a response time is generally the same as the relationship in the sensor element 101 shown in FIG. 3, and the response time is equal to or less than 1200 ms when x1 is equal to or less than 150 µm.

## Claims

1. A gas sensor (100) which detects a predetermined gas component in a measurement gas and has a sensor element (101) formed of an oxygen-ion conductive solid electrolyte as a main component, said sensor element comprising:
an internal space (20, 30) to which the measurement gas is introduced from the outside;
a first electrode (22, 51) formed on a surface of said internal space;
a second electrode (23) formed in a space different from said internal space; and
a pumping cell (21, 50) including said first electrode and said second electrode,
wherein
said pumping cell is operable to pump out oxygen existing in said internal space when a predetermined voltage is applied to between said first electrode and said second electrode,
the thickness of said internal space is 50 µm or more and 180 µm or less.

2. The gas sensor according to claim 1, wherein
a distance between said internal space and an upper surface of said sensor element is 220 µm or more and 600 µm or less.

3. The gas sensor according to claim 1 or 2, comprising:
a first internal space (20) and a second internal space (40) each serving as said internal space; and
a main pumping cell (21) and an auxiliary pumping cell (50) each serving as said pumping cell,
wherein
said measurement gas is introduced from said outside to said first internal space,
said second internal space is in communication with said first internal space under a predetermined diffusion resistance,
said main pumping cell has said first electrode (22) in said first internal space,
said auxiliary pumping cell has said first electrode (51) in said second internal space.

4. The gas sensor according to claim 3, further comprising a third electrode (44) which is formed in said second internal space and detects a voltage value in accordance with the amount of oxygen existing in said third internal space, wherein
said sensor element controls a pumping operation of said auxiliary pumping cell in accordance with said voltage value.

5. The gas sensor according to claim 1 or 2, comprising:
a first internal space, a second internal space, and a third internal space each serving as said internal space; and
a main pumping cell and an auxiliary pumping cell each serving as said pumping cell,
wherein
said measurement gas is introduced from said outside to said first internal space,
said second internal space is in communication with said first internal space under a predetermined diffusion resistance,
said third internal space is in communication with said second internal space under a predetermined diffusion resistance,
said main pumping cell has said first electrode in said first internal space,
said auxiliary pumping cell has said first electrode in said second internal space.

6. The gas sensor according to claim 5, further comprising a third electrode which is formed in said third internal space and detects a voltage value in accordance with the amount of oxygen existing in said third internal space, wherein
said sensor element controls a pumping operation of said auxiliary pumping cell in accordance with said voltage value.

7. The gas sensor according to claim 6, wherein
said third electrode is exposed in said third internal space.

8. A method for manufacturing a sensor element included in the gas sensor according to any one of claims 1 to 7, the method comprising the steps of:
a) preparing a plurality of ceramic green sheets having different thicknesses, said plurality of ceramic green sheets having a predetermined process performed thereon and having a predetermined circuit pattern formed thereon;
b) forming a laminated body by laminating said plurality of ceramic green sheets to one another;
c) cutting out said laminated body; and
d) baking the laminated body cut out in said step c).
